Europäisches Patentamt

European Patent Office

Office européen des brevets

(11) Publication number: **0 178 866**
**A1**

(12) # EUROPEAN PATENT APPLICATION

(21) Application number: **85307308.8**

(22) Date of filing: **11.10.85**

(51) Int. Cl.⁴: **H 04 N 5/445**
**H 04 N 7/16**

(30) Priority: **12.10.84 JP 213645/84**

(43) Date of publication of application:
**23.04.86 Bulletin 86/17**

(84) Designated Contracting States:
**DE FR GB NL**

(71) Applicant: **SONY CORPORATION**
**7-35 Kitashinagawa 6-Chome Shinagawa-ku**
**Tokyo 141(JP)**

(72) Inventor: **Inagaki, Isamu c/o Patents Divsion**
**Sony Corporation 6-7-35 Kitashinagawa**
**Shinagawa-ku Tokyo 141(JP)**

(72) Inventor: **Aoki, Haruo c/o Patents Divsion**
**Sony Corporation 6-7-35 Kitashinagawa**
**Shinagawa-ku Tokyo 141(JP)**

(74) Representative: **Thomas, Christopher Hugo et al,**
**D Young & Co 10 Staple Inn**
**London WC1V 7RD(GB)**

(54) **Image reception apparatus.**

(57) An image reception apparatus includes a tuner (2) for selecting a broadcast channel of a cable system, a video detector (3) connected to the tuner (2) for deriving output signals having video signals and command data of the selected channel, a data fetch circuit (4) for extracting the command data and character data from the output signals derived from the video detector (3), a display controller (5,6,7) for controlling video outputs to be displayed on a display screen, and a key pad (10) for supplying the control command to the display controller (5,6,7). The display controller (5,6,7) includes a character generator (6) for generating character signals to be displayed on the display and a masking circuit (7) for superimposing masking signals on the video signal on request.

FIG. 1

1

# IMAGE RECEPTION APPARATUS

This invention relates to image reception apparatus.

In a known image reception apparatus, such as a cable television (CATV) apparatus, a reception blocking control can be effected for a particular viewer or user. Such reception blocking controls can be applied to a programme that parents think to be unsuitable for their children (parental control), or to a programme for which the user has not paid a fee in the case of a pay TV system.

With such a reception blocking control, it is usual to mask or scramble the image on the picture screen.

Various methods of providing reception blocking controls may be considered. For example, the reception blocking control may originate from the transmitting side, or the user may effect the reception blocking control himself, and because of these various methods, control of the TV receiver is not always easy for the user, because the next expected operation is not apparent.

According to the present invention there is provided image reception apparatus comprising:

tuner means for selecting a broadcast channel;

video detector means connected to said tuner means for deriving output signals having video signals and command data of the selected channels;

data fetch means for extracting said command data and character data from said output signals derived from said video detector means;

display control means for controlling video outputs to be displayed on a display screen; and

key pad means for supplying a control command to said display control means;

characterized in that:

said display control means includes character generator means for generating character signals to be displayed on said display, and masking means for superimposing masking signals on said video signals on request.

The invention will now be described by way of example with reference to the accompanying drawings, throughout which like parts are referred to by like references, and in which:

Figure 1 is a block diagram of an embodiment of image reception apparatus according to the invention;

Figure 2 is a front view showing an example of a remote control pad used in the embodiment; and

Figures 3 to 8 are diagrams for explaining the operation of the embodiment.

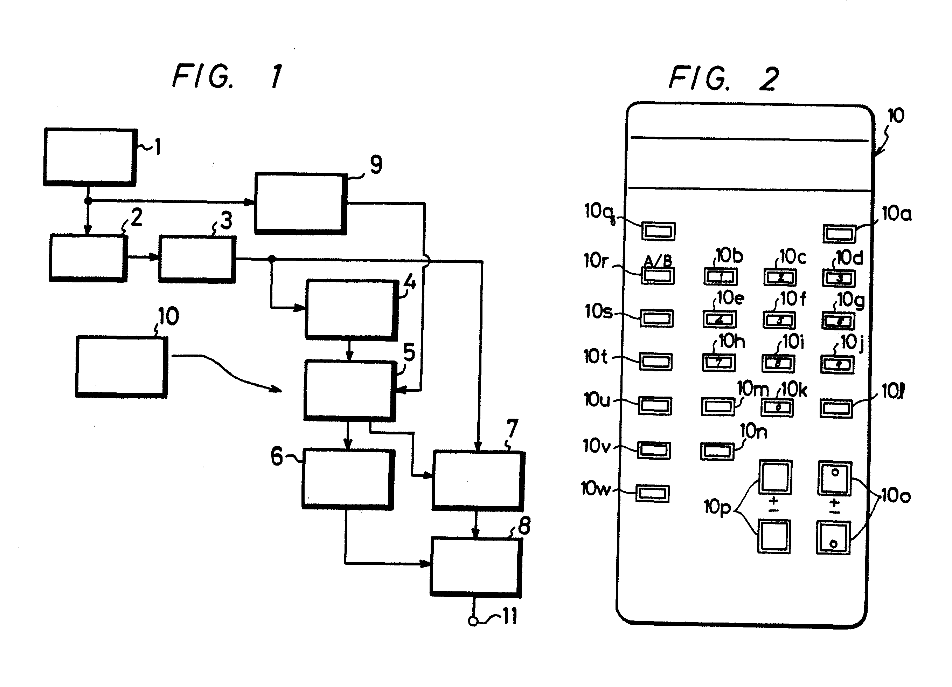

Referring to Figure 1, the image reception apparatus comprises a transmitting side or head end 1 which transmits on-screen display information together with video programmes, a tuner 2 which is supplied with the output from the head end 1, a video detector 3 including a video intermediate frequency amplifier which amplifies the output from the tuner 2, an IN BAND DATA read-in circuit 4 for reading therein IN BAND DATA such as reception blocking control data or scramble data in the output from the amplifier 3, and a microcomputer 5 for use in reception blocking control, to which the output from the IN BAND DATA read-in circuit 4 is supplied. A character generator and display controller 6 generates character signals and controls the display on the basis of the command data from the microcomputer 5. A blanking or masking circuit 7 superimposes a masking signal on the video signal from the video detector 3 on the basis of the command data derived from the microcomputer 5, thereby to blank the video signal. A mixing circuit 8 mixes the character information from the character generator and display controller 6 and the output from the masking circuit 7, and a frequency shift keying (FSK) receiver 9 receives OUT BAND DATA such as an emergency broadcast data from the head end 1. The output from the FSK receiver 9 is also supplied to the microcomputer 5.

A remote control pad 10 is provided for remote-controlling the microcomputer 5. As, for example, shown in Figure 2, the remote control pad 10 is provided with a plurality of operation keys corresponding to various functions of the image reception apparatus. There is a power source key 10a, ten keys 10b to 10k for the user to enter the channel number and to enter a desired block code (four figures) and a channel enter key 10l. After selected ones of the ten keys 10b to 10k have been depressed by the user in accordance with the channel number that the user wants to select, the channel enter key 10l is depressed. Then the number corresponding to the selected channel is displayed, for example, at upper right on the screen of a display apparatus (not shown). A channel key 10m is provided by which the television channel currently being viewed is displayed on the screen, and there is a code enter key 10n. After the ten keys 10b to 10k corresponding to a reserved blocking code have been depressed and the code enter key 10n has been depressed, four designated figures are entered as the identification code.

There are also two channel keys 10a for making the channel go up and down, two sound volume keys 10p for increasing and/or decreasing the sound volume, a muting key 10q for changing over the muting state of the sound, a cable switching key 10r for changing over the CATV cables, and a blocking set key 10s. As will be described later, if the blocking set key 10s is depressed, after the code registration or code verification, the channel 4 currently selected is blocked, or the reception thereof is blocked. When a blocking clear key 10t is depressed, then after code verification, the corresponding channel is released from blocking.

A key 10n selects normal television, and if the key 10u is depressed, the normal television picture can be viewed. When a cable digital audio (CADA) key 10v is depressed, an audio signal from the CADA system can be received, and when a game key 10w is depressed, it becomes possible to play a television game.

When various of the keys are depressed, the information from the remote control pad 10 is interpreted by the microcomputer 5 and in accordance with the information, the microcomputer 5 controls the respective circuits. In other words, the microcomputer 5 interprets not only the information from the transmitting side or head end 1, but also the information from the remote control pad 10 thereby to carry out the control operation thereof.

An output terminal 11 is connected to the mixing circuit 8. When the blanking or masking circuit 7 is controlled by the microcomputer 5 so as to superimpose the masking signal on the video signal derived from the video detector 3 or blank the video signal, only the character information from the character generator and display controller 6 is supplied to the output terminal 11.

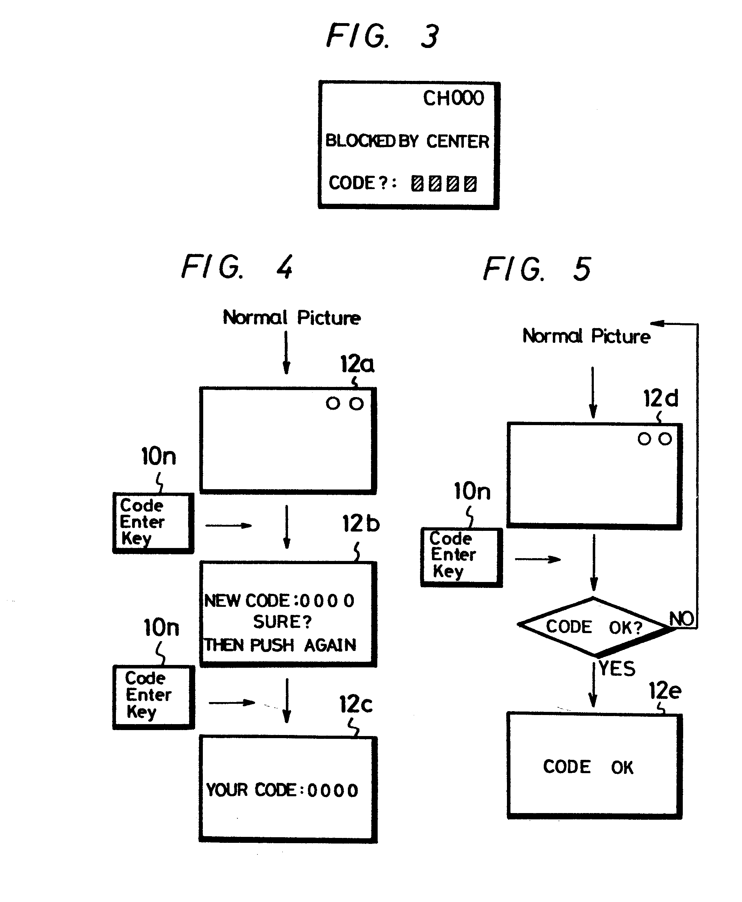

When a video signal on which blocking control data is superimposed is transmitted from the head end 1, this video signal is received by the tuner 2 and then converted to a video signal by the video detector 3. The blocking control data in this video signal is read in and detected by the IN BAND DATA read-in circuit 4 and then fed to the microcomputer 5. On the basis of the data concerning the blocking control information supplied thereto, the microcomputer 5 controls the character generator and display controller 6 so as to produce the character information, and also controls the masking circuit 7 to blank the video signal applied thereto. As a result, to the mixing circuit 8, there is supplied only the character information from the character generator and display controller 6. This transmitted character information is displayed in the form, for example, shown in Figure 3 on an image display device (not shown) such as a cathode ray tube (CRT). At this time, the sound is automatically muted.

During this display period, the user cannot see the television picture. However, as will be described later, if the user's blocking code is entered by using the ten keys 10b to 10k and the code enter key 10n is depressed, and then if the input code and the previously registered code are made coincident with each other, it becomes possible for the user to see the television picture.

Moreover, when the video signal on which the emergency broadcast data are superimposed is transmitted from the head end 1, the video signal is supplied through the tuner 2 and the video detector 3 to the masking circuit 7 as mentioned above, while the emergency broadcast data are received by the FSK receiver 9 and then fed to the microcomputer 5 as the OUT BAND DATA. Similarly, as described above, on the basis of the data supplied thereto, the microcomputer 5 controls the character generator and display controller 6 to produce the character information or data and further controls the masking circuit 7 to blank the video signal applied thereto. As a result, only the character data derived from the character generator and display controller 6 is supplied to the mixing circuit 8 so that this character data is displayed as "EMERGENCY" on the blanked screen at a predetermined position, for example, at the centre with a predetermined cycle, for example, a cycle of 250 ms in a flashing manner, by the image display apparatus (not shown). At this time, the sound is muted. In this case, it is possible that the video signal is not blanked but is supplied together with the character information.

When a tier level information which allows the reception of the video signal in accordance with the user's contract condition is superimposed upon the video signal, on the basis of the tier level information passed through the tuner 2 and the video detector 3, there is detected a tier level at each television programme by the IN BAND DATA read-in circuit 4.

On the other hand, a tier level at each receiver is detected by the FSK receiver 9, and both detected outputs are supplied to the microcomputer 5, in which they are compared with each other. At this time, if the programme now being received belongs to the appropriate tier level, the video signal is supplied to the output terminal 11. If the television programme currently received does not belong to the tier level, the microcomputer 5 controls the masking circuit 7 to blank the video signal supplied thereto and also controls the character generator and display controller 6 to produce the character data indicative of the non-tier level. As a result, only the character data from the character generator and display controller 6 is transmitted to the mixing circuit 8, so that this character data is displayed on the masked screen at a predetermined position, for example, at upper right, as the display of channel, and "NOT AUTHORIZED" is displayed at the centre of the screen by the image display apparatus (not shown). At this time, the sound is muted.

When the above three kinds of information are transmitted from the transmitting side or head end 1, this information is displayed dominantly relative to any other information.

Operation of the block display and the setting method by the remote control pad 10 will now be described with reference to Figures 4 to 8.

(A) Code registration

A normal television picture is displayed as shown in Figure 4 and then a desired block code (four figures) that the user wants to register is entered by using the ten keys 10b to 10k. For example, if the code is 1234, the ten keys 10b, 10c, 10d and 10e are depressed in sequence. In this case, in order to avoid any disadvantage upon displaying the channel, the display is made at the upper right hand of a screen 12a in the two figures. Accordingly, the display is changed in the order of 01 $\longrightarrow$ 12 $\longrightarrow$ 23 $\longrightarrow$ 34.

Next, when the code enter key 10n is depressed within a predetermined time, for example, within about three seconds, the display on the screen is changed as shown in a screen 12b. At this time, while the sound is not muted, the picture, other than the characters, is masked. Then, after a predetermined time, for example, about four seconds, the picture screen is returned to normal. Accordingly, in this case, the code is not registered. On the other hand, when the code enter key 10n is depressed within a predetermined time, for example, within about four seconds, the code is registered and the display is made as shown by a screen 12c. At this time, while the sound is not muted, the picture other than the characters is masked. Then, after a predetermined time, for example, about four seconds later, the picture screen is returned to normal. In this case, if the code registration has been carried out, the following code verification operation becomes necessary.

(B) Code verification

First, the normal picture is displayed as shown in Figure 5 and the user's blocking code is entered by using the ten keys 10b to 10k. Then, the code is displayed on the upper right hand position of a screen 12d.

Next, when the code enter key 10n is depressed, it is judged whether the input code coincides with the registered code or not. If they are coincident, the character information "CODE OK" is displayed as shown by a screen 12e. In this state, the picture other than the characters is also displayed. If not, the programme returns to the normal picture step. Then, after a predetermined time, for example, after about four seconds, the characters are erased. In this case, the verification of the normal channel is used when the blocking channel registration and the code correction are carried out, as will be described later.

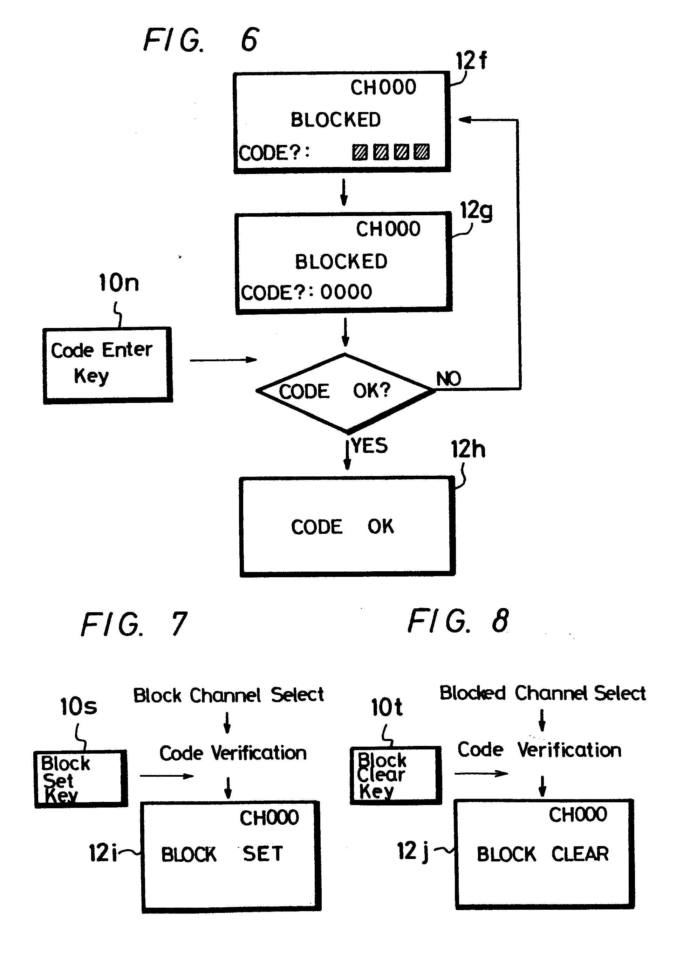

If a channel which has previously been blocked is selected by using the ten keys 10b to 10k, and the channel enter key 10l or the channel key 10o, a screen 12f as shown in Figure 6 is displayed. In this case, the pictures other than the characters are masked and the sound is muted, too. Next, if the user's code is entered by using the ten keys 10b to 10k, the code number is entered and the display is changed as shown by a screen 12g.

Next, if the code enter key 10n is depressed, it is judged whether the input code is coincident with the registered code or not. If they are coincident with each other, the character data "CODE OK" are displayed as shown by a screen 12h. Then, the masking of the picture screen and the muting of the sound are both released and after a predetermined time, for example, about four seconds later, the characters are erased. If not, the programme is returned to the step at which the screen 12t is to be displayed.

(C) Blocking channel registration

First, the channel that the user wants to block is selected and then the code verification is carried out in accordance with the above procedure (B).

Next, when the blocking set key 10s is depressed, a screen 12i as shown in Figure 7 is displayed. At this time, although the sound is not muted, the pictures other than the characters are masked. In this case, the channel, which is displayed on the upper right of the screen, is blocked. Then, after a predetermined time, for example, after about four seconds, the displayed picture screen is returned to normal. Accordingly, even when the channel is changed over next time or the power source is switched on, the registered channel is still blocked.

(D) Blocking channel cancel

First, the blocked channel is selected and the code verification is carried out in accordance with the above procedure (B).

Next, when the block clear key 10t is depressed, a picture screen 12j as shown in Figure 8 is displayed. At this time, although the sound is not muted, the picture other than the characters is masked. Then, after a predetermined time, for example, after about four seconds, the picture screen is returned to normal and the registered block channel is cancelled.

(E) Code correction

First, the code verification is carried out in accordance with the above procedure (B), and then a new code is registered in accordance with the above procedure (A).

As described above, the blocking display and the setting thereof can be carried out by the remote control pad 10.

When the reception blocking data as shown in Figure 3 are transmitted from the transmitting side or head end 1, if the user wishes to release this reception blocking control, it is sufficient for the user to carry out the operation in accordance with the above procedure (B). Thus, the blocked picture screen can then be seen.

As described above, since the on-screen display information from the transmitting side is received and then interpreted, the content of such information is displayed as characters on the screen of the CRT, and the on-screen display can also be controlled by the operation of the remote control pad at the receiving side. The reason why reception of a channel is blocked can be seen instantaneously by just viewing the screen, so that the user can enter a next operation step easily. Moreover, the reception blocking control by the user, and the reception blocking control from the transmitting side can easily be carried out by the remote control pad while observing the on-screen display information.

The character pattern prepared by the receiving side can be displayed on the screen by instruction from the transmitting side, and all the channels that can be received can be subjected to the reception blocking reservation state.

Furthermore, in cases other than the reception blocking control, such as emergency broadcasting, it is also possible to use the on-screen display command by the transmitting side.

In addition, since the processing is carried out in a fully electronic fashion, no matter what command the transmitting side transmits, the user can deal with the command using one remote control pad.

**0178866**

## CLAIMS

1.    Image reception apparatus comprising:

tuner means (2) for selecting a broadcast channel;

video detector means (3) connected to said tuner means (2) for deriving output signals having video signals and command data of the selected channels;

data fetch means (4) for extracting said command data and character data from said output signals derived from said video detector means (3);

display control means (5) for controlling video outputs to be displayed on a display screen; and

key pad means (10) for supplying a control command to said display control means (5);

characterized in that:

said display control means (5,6,7) includes character generator means (6) for generating character signals to be displayed on said display, and masking means (7) for superimposing masking signals on said video signals on request.

2.    Apparatus according to claim 1 wherein said display control means (5,6,7) generates character information indicating the status of the apparatus when said masking means (7) is in operation.

3.    Apparatus according to claim 2 wherein said display control means (5,6,7) includes a microcomputer (5) which selects said character information based on said command data or said control command.

4.    Apparatus according to claim 2 wherein said masking means (7) is controlled by said control command from said key pad means (10).

5.    Apparatus according to claim 4 wherein the control of said masking means (7) requires an input of the same code that has previously been registered.

6.    Apparatus according to claim 4 wherein the control of said masking means (7) is based on a tier level of a programme transmitted on said selected channel and a predetermined tier level of the apparatus.

FIG. 1

FIG. 2

0178866

0178866

## FIG. 3

```
                    CH000

BLOCKED BY CENTER

CODE ? :   ▨ ▨ ▨ ▨
```

## FIG. 4

Normal Picture

↓

12a
[ O O ]

10n
Code Enter Key  →

↓

12b
NEW CODE : 0 0 0 0
SURE?
THEN PUSH AGAIN

10n
Code Enter Key  →

↓

12c
YOUR CODE : 0 0 0 0

## FIG. 5

Normal Picture

↓

12d
[ O O ]

10n
Code Enter Key  →

↓

CODE OK?  —NO→

↓ YES

12e
CODE OK

## FIG. 6

CH000     12f

BLOCKED

CODE?:   ▨▨▨▨

↓

CH000     12g

BLOCKED

CODE?: 0000

10n

Code Enter Key

→

CODE OK?

NO →

YES ↓

12h

CODE OK

## FIG. 7

10s

Block Set Key

Block Channel Select

↓

Code Verification

↓

→

12i— CH000

BLOCK SET

## FIG. 8

10t

Block Clear Key

Blocked Channel Select

↓

Code Verification

↓

→

12j— CH000

BLOCK CLEAR

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | EP-A-0 112 575 (WALTER)<br><br>* page 2, line 7 - page 5, line 21 * | 1,2,4-6 | H 04 N 5/445<br>H 04 N 7/16 |
| Y | | 3,6 | |
| Y | EP-A-0 115 145 (SONY)<br>* page 2, line 15 - page 3, line 2; page 5, lines 19-31; figures 1, 3 * | 3 | |
| A | | 1,2,4 | |
| Y | EP-A-0 053 885 (JERROLD)<br>* page 1, line 1 - page 2, line 13 * | 6 | **TECHNICAL FIELDS SEARCHED (Int Cl 4)** |
| A | | 1 | H 04 N 5/00<br>H 04 N 7/00 |

The present search report has been drawn up for all claims

| Place of search | Date of completion of the search | Examiner |
|---|---|---|
| BERLIN | 16-12-1985 | DUDLEY C. |